# EUROPÄISCHE PATENTSCHRIFT

(11) **EP 2 134 645 B1**
(45) Veröffentlichungstag und Bekanntmachung des Hinweises auf die Patenterteilung: **13.11.2019**
(21) Anmeldenummer: 08707864.8
(22) Anmeldetag: 11.01.2008
(51) Int. Cl.: C01B 3/32, C01B 3/38, C10G 2/00, H01M 8/00

(54) **VERFAHREN ZUR ERZEUGUNG VON MITTEL- BIS LANGKETTIGEN KOHLENWASSERSTOFFEN**
METHOD FOR PRODUCING MEDIUM TO LONG-CHAINED HYDROCARBONS
PROCÉDÉ DE PRODUCTION D'HYDROCARBURES À CHAÎNE MOYENNE À LONGUE

(30) Priorität: 14.01.2007 DE 102007002476
(43) Veröffentlichungstag der Anmeldung: 23.12.2009
(73) Patentinhaber: Beck, Jürgen, 72108 Rottenburg (DE); Gantefort, Wilhelm, 46359 Heiden (DE)
(72) Erfinder: GANTEFORT, Wilhelm, 46359 Heiden (DE)
(74) Vertreter: Michalski Hüttermann & Partner Patentanwälte mbB
(86) Internationale Anmeldenummer: PCT/EP2008/050298
(87) Internationale Veröffentlichungsnummer: WO 2008/084101

(56) Entgegenhaltungen:
- WO-A-03/035590
- US-A- 5 763 716
- US-A1- 2005 267 224

## Beschreibung

### Gebiet der Erfindung:

Die vorliegende Erfindung betrifft ein Verfahren zur Erzeugung von mittel- bis langkettigen Kohlenwasserstoffen aus gasförmigen Alkanen und/oder Alkanhydraten durch den parallelen, zeitgleichen Ablauf einer energiespendenden und einer energiezehrenden Reaktion.

Verfahren zur Herstellung von mittel- bis langkettigen Kohlenwasserstoffen sind an sich bereits seit längerem bekannt. Aufgrund verschiedener Ursachen wurde und wird an der Synthese flüssiger Kraftstoffe aus gasförmigen Alkanen bzw. aus Kohle schon seit langem intensiv gearbeitet, insbesondere in Situationen, in denen flüssige Kraftstoffe knapp und/oder teuer waren, so z.B. in Deutschland während des Zweiten Weltkrieges, in Südafrika während des Apartheidregimes oder derzeit angesichts der weltweiten Verknappung der Erdölreserven.

Hierbei unterscheidet man insbesondere Biomass-to Liquid-Verfahren (BtL), Gas-to-Liquid-Verfahren (GtL) und Kohleverflüssigung. All diesen Verfahren ist gemein, dass aus einer kohlenstoffhaltigen Vorstufe (d.h. Biomasse, Methangas oder Kohle) ein Synthesegas hergestellt wird, das dann in flüssige Kohlenwasserstoffe überführt wird. Entsprechende Verfahren und Produkte sind unter den Marken SynFuel, Eco-Par, Carbo-V®-Verfahren, Biotrol, SunFuel, SunDiesel bekannt.

Insbesondere aufgrund der Klimadiskussion sind in jüngerer Zeit diese Verfahren stärker in das Interesse der Öffentlichkeit gerückt, da die mit ihnen herstellbaren Kraftstoffe die Erfordernisse an umweltfreundliche Energiequellen erfüllen, d.h. sie sind CO₂-neutral und verbrennen sauberer als fossile Kraftstoffe.

Allerdings leiden all diese Verfahren an dem Problem, dass die mit ihnen herstellbaren alternativen Kraftstoffe derzeit noch teurer sind als die bereits mit hohen Steuern belasteten, aus Erdöl hergestellten konventionellen Kraftstoffe.

In jüngster Zeit wurden überdies Verfahren zur Herstellung von flüssigen Alkanolen aus gasförmigen Alkanen vorgestellt. So hat die Firma Gas Technologies LLC unter dem Markennamen GasTechno ein Verfahren zur Herstellung von Methanol aus bei der Erdölförderung oder- raffination anfallendem, ansonsten abgefackeltem Gas, das zu einem großen Teil Methan enthält, entwickelt. Hierbei handelt es sich ebenfalls um ein GtL-Verfahren, bei dem allerdings kein Synthesegas als Zwischenschritt hergestellt wird.

Zwar ist Methanol als flüssiger Kohlenwasserstoff gut zu transportieren und für die Verwendung in Verbrennungsmotoren geeignet, allerdings weist dieses verfahren einige Nachteile auf. So erfolgt die Umsetzung von Methan zu Methanol durch kontrollierte Oxidation, was den nutzbaren Energiegehalt des erhaltenen Kraftstoffes reduziert. Hinzu kommt, dass Methanol flüchtig und überdies hochgiftig ist.

Aus diesem Grunde ist es wünschenswert, ein Verfahren zur Erzeugung von mittelbis langkettigen Kohlenwasserstoffen aufzuzeigen, das eine größere Wirtschaftlichkeit bietet und daher mittel- bis langkettige Kohlenwasserstoffe herstellbar sind, die in Bezug auf ihre Herstellungskosten niedriger sind als in den bekannten o.a. Verfahren und so besser mit den aus Erdöl hergestellten Kraftstoffen konkurrieren können. Hinzu kommt, dass besagte Kohlenwasserstoffe eine geringe Flüchtigkeit und Toxizität aufweisen sollen.

WO-A-03/035590 offenbart ein Verfahren und eine Vorrichtung zur Erzeugung von mittel- bis langkettigen Kohlenwasserstoffen. Methan wird in einem ersten Reaktor umgesetzt zu Synthesegas und weiter umgesetzt zu Kohlenwasserstoffen. Das Abgas der Kohlenwasserstoffsynthese ("tail gas") kann verwendet werden für Energieerzeugung in einer Gasturbine.

Aufgabe der vorliegenden Erfindung ist es daher, ein solches Verfahren zur Erzeugung von mittel- bis langkettigen Kohlenwasserstoffen, insbesondere Alkanen, aus gasförmigen Alkanen bereitzustellen.

### Zusammenfassung der vorliegenden Erfindung:

Diese Aufgabe wird mit den Ansprüchen der vorliegenden Erfindung gelöst. Demnach ist ein Verfahren zur Erzeugung von mittel- bis langkettigen Kohlenwasserstoffen, insbesondere Alkanen, aus gasförmigen Alkanen bzw. Alkanhydrate, vorgesehen, wobei in einem ersten Teilverfahren ein gasförmiges Alkan über eine ein- oder mehrschrittige Reaktion in mittel- bis langkettige Kohlenwasserstoffe (Syntheseprodukt) unter Freisetzung von molekularem Wasserstoff überführt wird, und in einem parallelen dazu ablaufenden zweiten Teilverfahren der in dem ersten Teilverfahren freiwerdende molekulare Wasserstoff zur Energieerzeugung verwendet wird. Dazu wird eine Brennstoffzelle verwendet.

Dabei wird mit der zeitgleichen Energiefreisetzung die Aktivierungsenergie für die Synthese der mittel- bis langkettigen Kohlenwasserstoffe aus den gasförmigen Alkanen bereitgestellt.

Das Verfahren bietet die Möglichkeit, dass durch die konstruktive Gestaltung und durch die verfahrenstechnische Handhabung Alkangase, insbesondere Methan, aus Bio-, Erd-, Synthese-, Gruben-, Klär-, und Deponiegasen oder aus Alkanhydrid-Lagerstätten (wie z.B. das in submarinen Lagerstätten gefundene Methanhydat) genutzt wird und reines CO₂ als Restgas verbleibt.

Sofern nachwachsende Kohlenstoffquellen eingesetzt werden, handelt es sich bei den Endprodukten um CO₂-neutrale Energieträger bzw. um CO₂-neutral erzeugte Rohstoffe. Darüber hinaus werden sogar die Emissionen an den klimarelevanten Gasen (CO₂, CH₄, N₂O) reduziert, da sie im Rahmen eines Fuel-Switch (dabei wird z. B das ansonsten bei der Erdölförderung oder der Erdölraffination nutzlos abgefackelte Erdgas zu hochreinem alternativem Kraftstoff synthetisiert) konventionellen fossilen Treibstoff substituieren und damit die bei seiner Nutzung zu erwartenden Treibhausgasemissionen zusätzlich verhindern. Darüber hinaus verbrennen sie sauberer als fossile Kraftstoffe, da die gasförmigen Ausgangsalkane u.a. keine mineralischen Verunreinigungen enthalten.

Unter dem Begriff "gasförmiges Alkan" werden insbesondere die Alkane Methan, Ethan, Propan, n-Butan und iso-Butan verstanden. Besonders bevorzugt wird dabei Methan verwendet.

Unter dem Begriff "mittel- bis langkettige Kohlenwasserstoffe" werden hier vorwiegend lineare Alkane mit Kettenlängen zwischen 10 und 22 Kohlenstoff-Atomen und einem Siedebereich zwischen 170 °C und 390 °C verstanden. Für Alkane dieses Größenbereichs hat sich auch der Begriff "synthetischer Diesel" eingebürgert.

Als Reaktionsprodukte können durch Anpassung der Prozessparameter und Zudosierung zusätzlicher Stoffe, Gase, Lösungen, Emulsionen, Suspensionen oder Dispersionen aber auch weitere Kohlenwasserstoffverbindungen bzw. komplett neue Verbindungen mit neuen Wirkungen und Eigenschaften in chemisch-physikalischer oder biologischer Hinsicht erzeugt werden (z. B. Werk- und Wirkstoffe wie etwa Pharmaka oder Phytotherapeutika bzw. Herbizide).

Durch Koppelung der beiden Teilverfahren und deren zeitgleichen Ablauf in einer kompakten Reaktionseinheit wird die Wirtschaftlichkeit des Verfahrens erheblich erhöht. Damit kann das Verfahren auch dezentral am Ort des Anfalls der gasförmigen Alkane durchgeführt werden, so z.B. in räumlicher Nähe zu einer landwirtschaftlichen Biogasanlage, zu einer Methanhydat-Lagerstätte oder zu einer Erdölförderungsanlage oder Erdölraffinerie, wo anfallendes Erdgas abgefackelt wird. Der Prozess kann sowohl im Batch- als auch im kontinuierlichen Betrieb gefahren werden.

Es handelt sich somit um ein zeitlich wie räumlich kombiniertes Verfahren, bei dem die in dem zweiten Teilverfahren freiwerdende Energie zum Betrieb der Reaktion des ersten Teilverfahrens verwendet wird. Unter dem Begriff "Betrieb" soll im Folgenden verstanden werden, dass die Energie
a) für die Ingangsetzung der Reaktion des ersten Teilverfahrens, und/oder
b) für die Aufrechterhaltung der Reaktion des ersten Teilverfahrens
verwendet wird. In Fall a) handelt es sich demnach um eine Reaktion, die nach Aufbringen einer gewissen Aktivierungsenergie von selbst abläuft, während es sich in Fall b) um eine Reaktion handelt, die endotherm ist, also dauerhaft eine externe Energiezufuhr benötigt.

Überdies kann als Nebeneffekt ein mehr oder weniger großer Anteil der Energie, die die im zweiten Teilverfahren freigesetzt wurde, in Form von elektrischem Strom und Wärme ausgekoppelt werden, nachdem mit ihrer Hilfe die Reaktion des ersten Teilverfahrens in Gang gesetzt wurde und sie nicht vollständig zur Aktivierung bzw. zur Aufrechterhaltung des ersten Teilverfahrens benötigt wird

Die Reaktion bzw. die Reaktionen des ersten Teilverfahrens kann/können dabei z.B. mit Hilfe eines Lichtbogens in Gang gesetzt werden. Andere Möglichkeiten schließen eine direkte oder indirekte Wärmezufuhr, z.B. auch mittels radiativer Energiezufuhr, die Anlage eines elektromagnetischen Feldes, die Zufuhr von Schallenergie, die Zufuhr von elektromagnetischen Wellen wie Radiowellen, Mikrowellen, UV-Licht, sichtbarem Licht und IR-Licht, die Einwirkung von Induktion und dergleichen ein.

Gleichwohl kann natürlich vorgesehen sein, dass die Reaktion des ersten Teilverfahrens auch mit anderweitig freigewordener Energie in Gang gesetzt und/oder aufrecht erhalten wird. In diesem Fall kann die im zweiten Teilverfahren freiwerdende Energie ebenfalls anderweitig genutzt werden.

Sollte die bei dem zweiten Teilverfahren freiwerdende Energie zum Betrieb der Reaktion des ersten Teilverfahrens gemäß obiger Definition (d.h. Ingangsetzung und/oder Aufrechterhaltung) nicht ausreichen, kann z.B. weiteres Methangas direkt verwendet werden, um z.B. Wärme- und/oder elektrische Energie zu liefern, die für die Ingangsetzung und/oder Aufrechterhaltung der Reaktion des ersten Teilverfahrens verwendet werden kann.

Im zweiten Teilverfahren wird der molekulare Wasserstoff in einer Brennstoffzelle zur Erzeugung von elektrischem Strom verwendet.

Eine Brennstoffzelle besteht aus zwei Elektroden, die durch eine Membran oder Elektrolyt (lonenleiter) voneinander getrennt sind. Die Anode wird mit dem Brennstoff umspült, i.d.R. Wasserstoff. Es kann hierfür aber auch Methan als Brennstoff dienen. Die Kathode wird mit dem Oxidationsmittel umspült, i.d.R. Sauerstoff, das dort reduziert wird. Die Elektrodenplatten/Bipolarplatten bestehen meist aus Metall oder Nano-Carbon-Röhrchen. Zur besseren Katalyse sind sie mit einem Katalysator beschichtet, zum Beispiel Platin oder Palladium. Als Elektrolyten können beispielsweise gelöste Laugen oder Säuren, Alkalicarbonatschmelzen, Keramiken oder Membrane dienen.

An der Anode wird der molekulare Wasserstoff oxidiert, d.h. er gibt Elektronen ab und reagiert im wässrige Medium der Zelle zu Hydroniumionen (H₃O⁺), die die Membran passieren und an der Kathode mit Superoxid-Anionen zu Wasser reagieren. Dabei fließt ein Strom, der z.B. für Antriebs- oder Heizzwecke oder zur Ausbildung eines Lichtbogens genutzt werden kann. Die gelieferte Spannung liegt theoretisch bei 1,23 Volt für eine Wasserstoff-Sauerstoff-Zelle bei einer Temperatur von 25 °C. Dabei werden folgende Reaktionsschemata eingehalten:

| | |
|---|---|
| 2 H₂ + 4 H₂O → 4 H₃O⁺ + 4e⁻ | [1] (Oxidation des H₂ an der Anode) |
| O₂ + 4 H₃O⁺ + 4e⁻ → 6 H₂O | [2] (Reduktion des O₂ an der Kathode) |
| | |
| 2 H₂ + O₂ → 2 H₂O | [3] (Summenformel) |

Für den Fall, dass die bei diesem zweiten Teilverfahren unter ausschließlicher Verwendung des beim ersten Teilverfahren freiwerdenden Wasserstoffs freiwerdende Energie zum Betrieb der Reaktion des ersten Teilverfahrens gemäß obiger Definition (d.h. Ingangsetzung und/oder Aufrechterhaltung) nicht ausreicht, kann z.B. weiteres Methangas direkt in die Brennstoffzelle eingeleitet werden, um so die fehlende Energie für die obigen Reaktionen des ersten Teilverfahrens bereit zu stellen.

Alternativ kann vorgesehen sein, dass anstelle einer herkömmlichen Brennstoffzelle eine sogenannte Bio-Brennstoffzelle verwendet wird, die mit Hilfe von Bakterien aus Wasserstoff oder Methan elektrischen Strom erzeugt.

Grundsätzlich kann es sich bei den verwendeten Gasen um jegliche Arten von gasförmigen Alkanen bzw. Alkanhydraten handeln, insbesondere auch. Pyrolysegase.

Besonders bevorzugt ist jedoch vorgesehen, dass in dem ersten Teilverfahren Methangas in einem ersten Reaktionsschritt in Synthesegas überführt wird.

Dabei wird Methan durch Zufuhr von Sauerstoff und Wasserdampf bzw. Sauerstoff in Synthesegas überführt, das aus einem Gemisch aus Kohlenmonoxid und Wasserstoffgas besteht. Die Reaktion läuft z.B. nach folgendem Schema ab:

CH₄ + H₂O →⁻ CO + 3 H₂ [4]

Dieses Verfahren ist auch als Dampfreformierungsverfahren bekannt; es ist endotherm, d.h. es verlangt nach einer Energiezufuhr (ΔH = + 206,2 kJ/mol).

Neben dem Dampfreformierungsverfahren kann das Methangas jedoch auch durch partielle Oxidation zu Synthesegas gesetzt werden. Diese Reaktion läuft nach folgendem Schema ab:

CH₄ + 0,5 O₂ → CO + 2 H₂ [5]

Im Gegensatz zu dem erstgenannten Verfahren ist diese Reaktion exotherm, d.h. es wird Energie frei (ΔH = -35,7 kJ/mol); allerdings ist die Ausbeute an molekularem Wasserstoff geringer.

An die Synthesegaserzeugung schließen sich in einer bevorzugten Ausgestaltung ggf. Reinigungs- und Aufbereitungsprozesse an. Dies können z.B. die folgenden sein:
- Rußabtrennung
- Wasserentfernung und Trocknung
- CO₂-Abtrennung
- Abtrennung von Schwefelverbindungen
- Einstellung des gewünschten stöchiometrischen CO : H₂ Verhältnisses für die spätere Synthese.

Weiterhin ist bevorzugt vorgesehen, dass in dem ersten Teilverfahren das Synthesegas in einem zweiten Reaktionsschritt in mittel- bis langkettige Kohlenwasserstoffe überführt wird. Besonders bevorzugt stellt dieser zweite Reaktionsschritt in dem ersten Teilverfahren eine Reaktion nach dem Fischer-Tropsch-Syntheseverfahren dar. Die Fischer-Tropsch-Synthese wurde erstmals 1925 beschrieben. Dabei wird das Synthesegasgemisch in flüssige Kohlenwasserstoffe überführt. Hierbei handelt es sich um eine Aufbaureaktion von CO/H₂-Gemischen an Eisen- oder Kobalt-Katalysatoren zu langkettigen Alkanen. Die Reaktion verläuft nach folgendem Schema in mehreren (n) Schritten:

nCO + (2n + 1)H₂ → CₙH₂ₙ₊₂ + nH₂O [6]

Das mit diesem Verfahren erzeugte Produkt zeichnet sich im Gegensatz zu Dieselölen, die aus fossilen Brennstoffen hergestellt wurden, dadurch aus, dass es kaum aromatische Alkane bzw. Schwefelanteile enthält. Daher verbrennt ein solches Produkt bei wesentlich geringerer Ruß- und Schwefeldioxidbildung.

Aus diesen Gründen eignet sich das Produkt vor allem als hochwertiger Dieselkraftstoff mit hoher Cetanzahl (Meßgröße für die Zündwilligkeit von Dieselkraftstoff) und guter Umweltverträglichkeit. Durch Einstellung der Sysnthesebedingungen kann überdies ein Produkt mit genau definiertem Dampfdruck, Siedeverlauf und ähnlichen, für die Verbrennung in einem Motor maßgeblichen Parametern eingestellt werden. Der Reaktionsmechanismus weist vermutlich die folgenden Teilschritte auf:
1. Adsorption von CO und H₂ an eine metallische Oberfläche
2. Ausbildung von Carbiden, Carbylenen, Methylenen und Methylgruppen
3. Polymerisierung von Methylenen an der Oberfläche zu Alkanen

Das optimale Verhältnis von H₂ zu CO für die Fischer-Tropsch-Synthese ist zwei zu eins. Aus diesem Grunde liegt bei Verwendung des oben genannten Synthesegases ein Wasserstoffüberschuss vor, der anderweitig verwendet werden kann.

Die Reaktion läuft exotherm ab. Das bedeutet, dass die Wärmeabfuhr eine entscheidende verfahrenstechnische Herausforderung darstellt. Für die Synthese muss eine bestimmte Temperatur konstant gehalten werden. Ein deutlicher Anstieg würde zu einer schnellen Verkokung des Katalysators und damit zum Abbruch der Synthese führen.

Bevorzugt ist daher vorgesehen, dass der zweite Reaktionsschritt des ersten Teilverfahrens bei einem Druck zwischen 1 und 30 bar und bei einer Temperatur zwischen 160°C und 350°C abläuft.

Dabei führen hohe Temperaturen (T > 330°C) zur vermehrten Bildung von Leichtsiedern, d.h. kurzkettigen Kohlenwasserstoffen. Um einen hohen Anteil an langkettigen Kohlenwasserstoffe zu erzeugen, sollte das Verfahren hingegen bei niedrigeren Temperaturen ablaufen (T < 250°C). Damit fällt allerdings auch ein relativ hoher Anteil von Wachsen an, der beim anschließenden Hydrocracking durch Zufuhr von Wasserstoff gezielt in kürzere Ketten der Dieselfraktion aufgespalten wird.

Als Katalysatoren kommen dabei insbesondere Eisen und Kobalt zum Einsatz. Diese können auch in Legierungen vorliegen, die als Zusätze Alkalimetalle, Kupfer, Ammoniak, Mangan, Vanadium, Titan und dergleichen enthalten.
Als Trägermaterialien für diese Katalysatoren können z.B. schwerreduzierbare Metalloxide, Aktivkohle, Polymere und Zeolithe verwendet werden

Zur Herstellung von n-Decan (C₁₀H₂₂) werden 10 Methanmoleküle und 10 Wassermoleküle eingesetzt. Im ersten Reaktionsschritt erhält man dabei 10 CO-Moleküle und 30 H₂-Moleküle, von denen im zweiten Schritt wiederum 10 CO-Moleküle und 21 H₂-Moleküle eingesetzt werden. Übrig bleiben also 9 H₂-Moleküle, die z.B. einer Brennstoffzelle zugeführt werden können.

Will man hingegen n-Dodecan herstellen (C₁₂H₂₆), so müssen 12 Methanmoleküle und 12 Wassermoleküle eingesetzt werden. Im ersten Schritt erhält man dabei 12 CO-Moleküle und 36 H₂-Moleküle, von denen man im zweiten Schritt wiederum 12 CO-Moleküle und 25 H₂-Moleküle einsetzen muß. Übrig bleiben also 11 H₂-Moleküle.

Zur Herstellung von n-Hexadecan ("Cetan", C₁₆H₃₄) müssen 16 Methanmoleküle und 16 Wassermoleküle eingesetzt werden. Im ersten Schritt erhält man dabei 16 CO-Moleküle und 48 H₂-Moleküle, von denen man im zweiten Schritt wiederum 16 CO-Moleküle und 33 H₂-Moleküle einsetzen muß. Übrig bleiben also 15 H₂-Moleküle.

Weitere Verfahrensparameter, die einen Einfluß insbesondere auf die Zusammensetzung der erfindungsgemäß herstellbaren Alkane haben, sind neben der Verfahrenstemperatur die Auswahl des geeigneten Katalysators, die Art des Energieeintrags (Lichtbogen, Wärmeenergie), die Anlage eines elektromagnetischen Feldes (gleich- oder Wechselfeld), die hierfür oder für den Lichtbogen eingebrachte Spannungs- und Stromstärke, der Druck, die Temperatur, die Reinheit und der Volumenstrom der eingeleiteten Gase, eine ggf. vorgesehene Taktung oder Periodizität des Energieeintrags, eine zeitabhängige räumliche Veränderung von ggf. verwendeten Elektroden, der Einsatz piezoelektrischer Energie (mit Variation der Kristalle), die Verwendung geeigneter Dotierungsmittel, die Verwendung von Induktionen, Ionisierung der eingeleiteten Gase, die statische Aufladung von Inputsubstraten oder Teilen des oder der Reaktoren, die Verwendung von Leitbleichen, Ventilen, Düsen, Leitschaufeln oder oberflächenvergrößernden Materialien in den verwendeten Reaktoren, die Verwendung von teilpermeablen Membranen.

Die verwendeten Inputsubstrate, d.h. insbesondere die verwendeten Alkangase bzw. Synthesegase, können überdies in verschiedenen Aufbereitungsformen in die Reaktoren eingebracht werden, insbesondere als Aerosole, d.h. gemischt mit einem pulverförmigen Substrat, das z.B. als Reaktionsoberfläche dienen und/oder eine katalytische Wirkung haben kann.

Weiterhin ist bevorzugt vorgesehen, dass das Verfahren weitere Schritte aufweist ausgewählt aus der Gruppe enthaltend:
▪ Fraktionierte Destillation (Rektifikation) des Syntheseprodukts
▪ Hydrocracking einer oder mehrere Fraktionen des Syntheseprodukts
▪ Entrussung / Entstickung des Synthesegases

Zwar läßt sich durch Auswahl der Reaktionsbedingungen bei der Synthese die Alkanzusammensetzung recht genau bestimmen, gleichwohl ist ggf. noch eine Aufreinigung des Syntheseprodukts durch fraktionierte Destillation erforderlich, um zu kurz- bzw. langkettige Alkane aus dem Gemisch zu entfernen, die ansonsten die Qualität des herzustellenden Treibstoffes beeinträchtige würden. Insbesondere letztere können durch an sich bekannte Hydrocracking-Verfahren in kürzerkettige Alkane überführt und so dem Produkt zugeführt werden.

Auch hier kann insbesondere erfindungsgemäß vorgesehen sein, dass die für die Destillation erforderliche Wärmeenergie aus der Verwertung des bei der Synthesegeasproduktion anfallenden Waserstoffs stammt. Ebenso kann die Wärmeenergie aus der eigentlichen Synthesereaktion stammen, wenn diese exotherm ist. Im Übrigen kann für die Destillation eine aus dem Stand der Technik bekannte Brüdenkompressionskolonne oder eine Wärmeintegrationskolonne (Heat integrated Distillaion Column, HIDiC) zum Einsatz kommen. Beide Kolonnen weisen gegenüber herkömmlichen Rektifikationskolonnen einen erheblich geringeren Energiebedarf auf. Hinzu kommt, dass die für den in beiden Kolonnen vorhandenen Kompressor erforderlich Antriebsenergie (insbesondere elektrischer Strom) aus der Verwertung des bei der Synthesegasproduktion anfallenden Wasserstoffs bei Verstromung des Wasserstoffs in einer Brennstoffzelle stammen kann.

Besonders bevorzugt ist vorgesehen, dass das verwendete Methangas aus der Biogasproduktion stammt.

Das verwendete Methangas stammt bevorzugt aus der Bio-, Erd-, Synthese-, Gruben-, Klär-, und/oder Deponiegasproduktion oder aus Methanhydrat. Ebenso kann es als Nebenprodukt bei der Erdölförderung oder -raffination anfallen.

Biogas enthält 45 - 75 Vol.-% Methangas, den Rest bilden Kohlendioxid, Wasserdampf, Stickstoff und in geringen Anteilen Wasserstoff, Ammoniak und Schwefelwasserstoff. Bei Biogas handelt es sich um eine sogenannte erneuerbare Energiequelle. Biogas entsteht bei der anaeroben Vergärung von organischem Material durch Mikroorganismen; dabei stammt das organische Material entweder aus landwirtschaftlicher Produktion oder aus dem kommunalen oder industriellen Bereich (Bioabfälle, biologische Rest- und Wertstoffe).

Biogas lässt sich inzwischen aus Nachwachsenden Rohstoffen sehr wirtschaftlich herstellen. Insbesondere Vorarbeiten der Anmelder zu diesem Thema haben die Rentabilität von Biogasanlagen wesentlich erhöht. Ein wesentliches Problem der Biogasanlagen ist, dass das anfallende Bio- bzw. Methangas zwar für einen kurzfristigen Zeitraum gespeichert werden kann, allerdings steht für die in der Regel im ländlichen Raum befindlichen Anlagen bislang keine Infrastruktur zur Verfügung, mit welcher das erzeugte Gas abtransportiert werden kann. Hier sind Bemühungen zum Aufbau von Mikrogasnetzen und zur Einspeisung von Bioerdgas ins öffentliche Gasnetz erkennbar, die durch eine neue Ausrichtung des EEG (Gesetz zur Nutzung Erneuerbarer Energien im Entwurf vorliegend) zukünftig wahrscheinlich noch deutlich verstärkt werden. Dennoch wird Biogas in der Regel heutzutage ortsnah in sogenannten Blockheizkraftwerken verstromt. Diese haben einen elektrischen Wirkungsgrad von etwa 36 bis 42 %, d.h. ca. 64 bis 58 % der chemischen Energie des Biogases werden in Wärmeenergie überführt, deren Abführung und insbesondere deren vernünftige Nutzung häufig zu Problemen führt. Setzt man hinzu, dass bei der Nutzung der elektrischen Energie (z.B. in Leuchtmitteln, Motoren oder elektrischen Heizungen) erneut Wirkungsgrade von 50 % und schlechter zu veranschlagen sind, kommt man im Resultat zu einer effektiven Nutzung der chemischen Energie des Biogases von 18 bis 21 % und teilweise noch schlechter. Das erfindungsgemäße Verfahren schafft nun die Möglichkeit, das erzeugte Biogas auf wirtschaftliche Art und Weise und mit hohem Wirkungsgrad in einen unbegrenzt lager- und transportfähigen und vor allem auch extrem transportwürdigen Flüssigkraftstoff umzuwandeln, der z.B. in Dieselmotoren, Ölheizungen oder auch in Flugzeugen verbrannt werden kann. Da moderne Dieselmotoren einen Wirkungsgrad von 45 % und besser haben, kann durch die Herstellung von mittel- bis langkettigen Alkanen aus Biogas eine wesentlich effektivere Nutzung der chemischen Energie des Biogases erzielt werden. Dies führt zu einer drastischen Reduktion der spezifischen Treibhausgasemissionen pro Einheit energetischer Nutzarbeit (g CO₂ / kWh).

Als Inputsubstrat kann auch Methanhydat aus marinen Quellen verwendet werden, das in bestimmten Tiefseebereichen in großen Mengen verfügbar gemacht werden kann. Dies kann zu einer wesentlichen Erweiterung der Basis der globalen Energiebereitstellung beitragen.

Die beide erwähnten Teilverfahren finden räumlich und/oder zeitlich miteinander verbunden statt (parallele Prozesse).

Weiterhin ist eine Vorrichtung zur Erzeugung von mittel- bis langkettigen Kohlenwasserstoffen, insbesondere Alkanen, aus gasförmigen Alkanen oder Alkanhydraten (z. B. Methanhydat vom Meeresboden) vorgesehen. Die Vorrichtung ist im Anspruch 8 definiert.

Beide Reaktoren sowie besagte Einrichtung können dabei bevorzugt auch als Teile eines gemeinsamen Reaktors konstruiert und betrieben werden

Die Vorrichtung kann überdies die folgenden weiteren Merkmale aufweisen:
a) der erste Reaktor weist einen Einrichtung zur Erzeugung von Synthesegas sowie eine Einrichtung zur Durchführung einer Polymerisierungsreaktion von Synthesegas zu mittel- bis langkettigen Alkanen auf;
b) der erste Reaktor weist Einrichtungen zur Fraktionierten Destillation (Rektifikation) des Syntheseprodukts, zum Hydrocracking einer oder mehrere Fraktionen des Syntheseprodukts und/oder zur Entrusung des Synthesegases auf;
c) die Vorrichtung ist kombiniert mit einer Biogasanlage, einer Anlage zur Gewinnung von Klärgas, Deponiegas oder Grubengas, einer Kläranlage mit anaerober Behandlungsstufe, einer Auffanvorrichtung für gasförmige Alkane in einer Erdölförerungsanlage oder einer Erdölraffinerie, und/oder einer Anblage zur Gewinnung von Alkanhydraten;

Besonders bevorzugt ist vorgesehen, dass der erste und der zweite Reaktor, und dabei insbesondere die Einrichtung zur Erzeugung von Synthesegas, die Einrichtung zur Durchführung einer Polymerisierungsreaktion von Synthesegas zu mittel- bis langkettigen Alkanen sowie die Brennstoffzelle zur Energieerzeugung aus dem in dem ersten Reaktor freiwerdenden molekularen Wasserstoff, in einer gemeinsamen Vorrichtung räumlich eng mit einander verbunden sind. Die gemeinsame Vorrichtung ist bevorzugt sehr kompakt und insbesondere transportabel ausgelegt, mit dem Ziel ihres dezentralen Einsatzes. Zentrale Großanlagen sind jedoch ebenfalls möglich.

Für eine solche Vorrichtung bieten sich insbesondere Brennstoffzellen an, die bei hohen Temperaturen (> 200 °C) betrieben werden können, so z.B. "Solid Oxide Fuel Cells" (SOFC), "Molten Carbonate Fuel Cells" (MCFC) und "Phosphoric Acid Fuel Cells" (PAFC). Aufgrund der Tatsache, dass die Brennstoffzelle flüssigkeitsgefüllt ist und Flüssigkeiten nicht kompressibel sind, lassen sich solche Brennstoffzellen auch bei den Drücken einsetzen, wie sie z.B. für die Fischer-Tropsch Reaktion erforderlich sind.

Weiterhin ist vorgesehen, mittel- bis langkettige Kohlenwasserstoffe, insbesondere Alkane, bereitzustellen, die mit einem der vorgenannten Verfahren herstellbar sind.

Wie bereits erwähnt, läßt sich die stoffliche Zusammensetzung der Syntheseprodukte durch Einstellung geeigneter Verfahrensparameter sehr genau steuern. So kann z.B. die mittlere Kettenlänge der erzeugten Alkane genau eingestellt werden. Dabei ist der Schwefelanteil ebenso gering wie der Anteil an cyclischen Alkanen. Die erzeugten Produkte stellen somit gegenüber dem petrochemisch hergestellten Dieselöl einen sehr hochwertigen und stofflich genau charakteriserten Brennstoff dar, der z.B. als synthetischer Diesel verwendet werden kann. Ebenso können die erfindungsgemäß hergestellten mittel- bis langkettigen Alkane auch als hochreine organische Ausgangsstoffe für die Synthese komplexer organischer Verbindungen dienen.

### Zeichnungen:

Die vorliegende Erfindung wird durch die im Folgenden diskutierten Zeichnungen genauer erläutert. Dabei ist zu beachten, dass die Beispiele nur beschreibenden Charakter haben und nicht dazu gedacht sind, die Erfindung in irgendeiner Form einzuschränken.

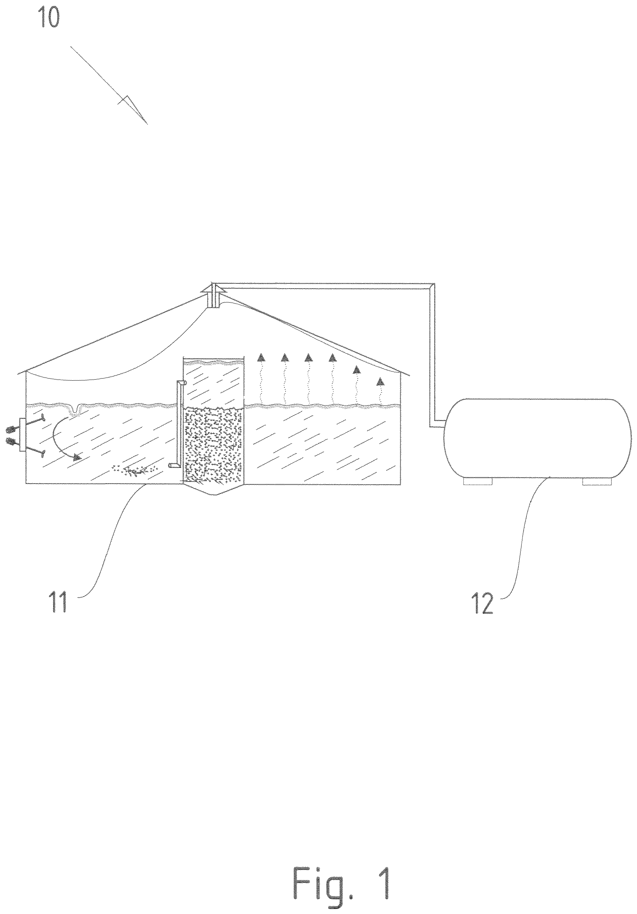

Fig. 1 zeigt eine Anlage 10 zur Erzeugung von Biogas mit einem Biogasfermenter 11 und einem angeschlossen Sammelbehälter 12 für das erzeugte Biogas. Biogasfermenter der gezeigten Art sind Gegenstand der bereits eingereichten Patentanmeldungen der Erfinder mit den Anmeldenummern DE102005054323 und DE 102007024378.

Nicht dargestellt ist eine optionale Entschwefelungsanlage für das Biogas sowie eine Anlage zur Aufreinigung des im Biogas enthaltenen Methangases bzw. eine Anlage zur Nutzung des Methanhydrats.

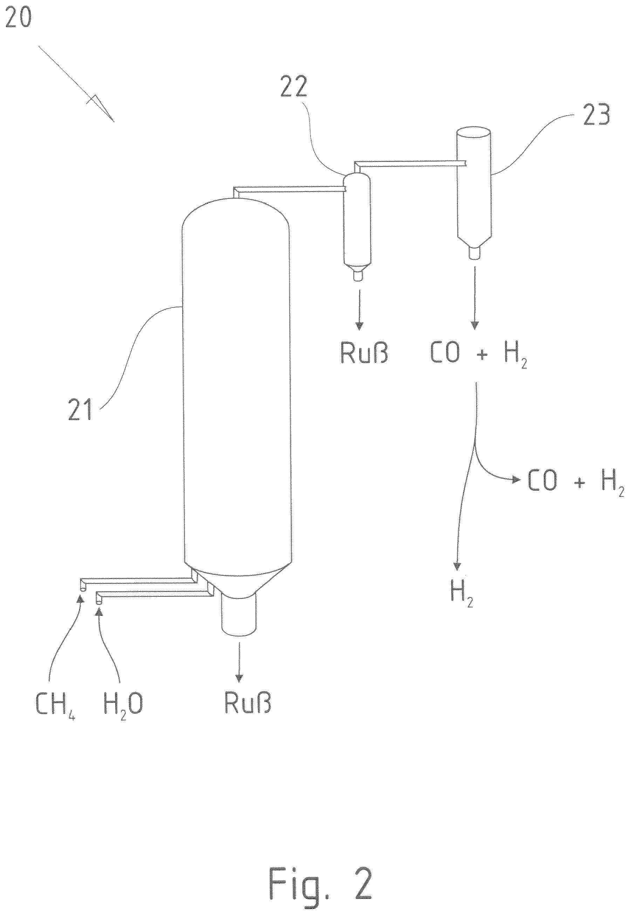

Fig. 2 zeigt symbolhaft eine Teilanlage 20 zur Herstellung von Synthesegas. Hier wird in einem Reaktor 21 aus Methangas und Wasserdampf ein Synthesegasgemisch enthaltend Kohlenmonoxid und molekularen Wasserstoff erzeugt. Anschließend an den Reaktor 21 durchläuft das Synthesegasgemisch einen Rußabscheider 22 und eine Gasreinigungstufe 23.

Das Verfahren kann unter Ausschluß von Sauerstoff ablaufen und ist dann endotherm, d.h. es verlangt nach einer Energiezufuhr (nicht dargestellt). Alternativ kann das Verfahren auch in Anwesenheit von Sauerstoff stattfinden und ist dann exotherm; allerdings ist in diesem Fall die Wasserstoffausbeute geringer (siehe Text).

Wie in Fig. 2 gezeigt, wird ein Teil des Synthesegasgemisches dem weiteren Syntheseverfahren zugeführt, während molekularer Wasserstoff aus dem Verfahren ausgeschleust und erfindungsgemäß zur Energieerzeugung verwendet wird.

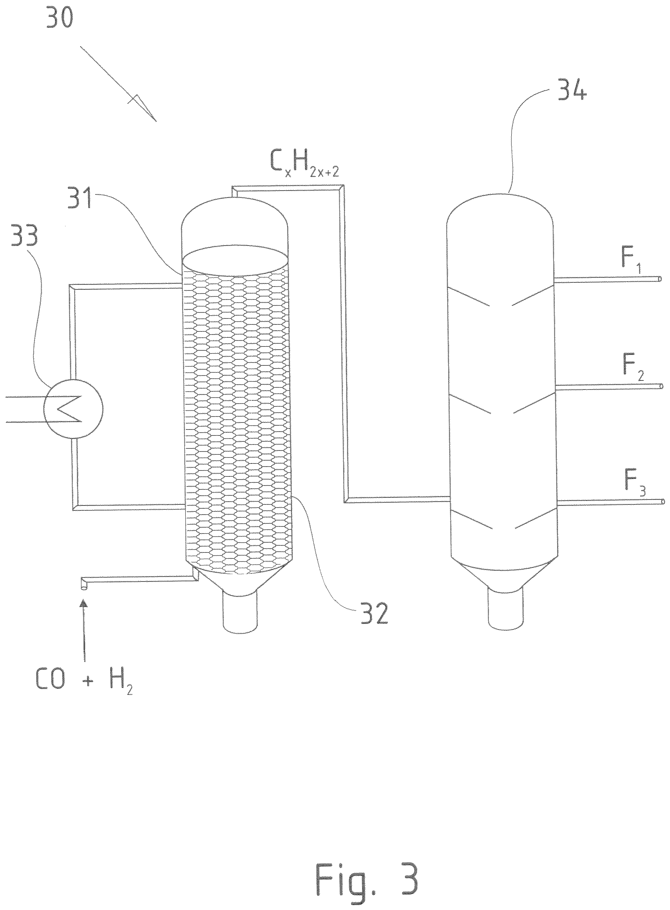

Fig. 3 zeigt symbolhaft eine Teilanlage 30 zur Herstellung von mittel- bis langkettigen Kohlenwasserstoffen aus dem Synthesegas. Der hier beispielhaft gezeigte Syntheseweg ist der Fischer-Tropsch-Syntheseweg. Hierbei wird ein Reaktor 31 verwendet, der z.B. einen Kobaltkatalysator enthält. Als Reaktionsbett 32 werden z.B. schwerreduzierbare Metalloxide, Aktivkohle, Polymere und Zeolithe verwendet.

Da das Verfahren bei einem Druck zwischen 1 und 30 bar und bei einer Temperatur zwischen 160°C und 350°C abläuft, ist ein Wärmetauscher 33 vorgesehen, mit welchem der Reaktor gekühlt bzw. beheizt werden kann. Die hierfür erforderliche Energie stammt insbesondere aus der Verwertung des überschüssigen, bei der Synthesegasproduktion freiwerdenden Wasserstoffs.

Dabei führen hohe Temperaturen (T > 330°C) zur vermehrten Bildung von Leichtsiedern, d.h. kurzkettigen Kohlenwasserstoffen. Um einen hohen Anteil an langkettigen Kohlenwasserstoffe zu erzeugen, sollte das Verfahren hingegen bei niedrigeren Temperaturen ablaufen (T < 250°C).

Grundsätzlich erhält man jedoch ein Gemisch unterschiedlich langer Alkane, so dass ggf. ein anschließender Fraktionierschritt erforderlich sein kann. Die erhaltenen Reaktionsprodukte werden daher in der gezeigten Ausführungsform einer Fraktionierkolonne 34 zugeführt, die das Gemisch in die Fraktionen F₁, F₂ und F₃ auftrennt, die aufgrund unterschiedlicher Kettenlängen unterschiedlich hohe Dampfdrücke haben. Auch hier stammt die für die Destillation erforderliche Energie insbesondere aus der Verwertung des überschüssigen, bei der Synthesegasproduktion freiwerdenden Wasserstoffs.

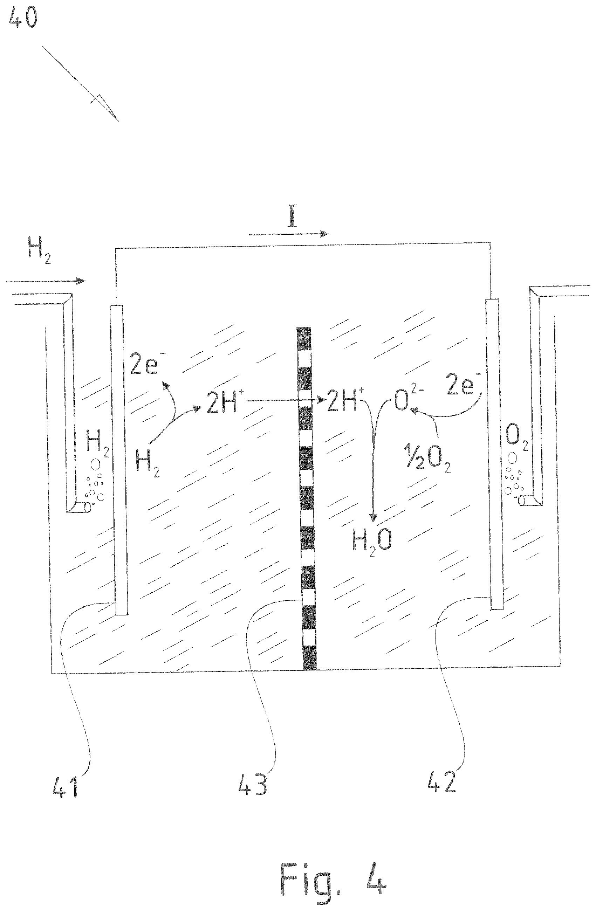

Fig. 4 zeigt symbolhaft eine Brennstoffzelle 40, in welcher der bei der Synthesegasproduktion freiwerdende molekulare Wasserstoff zur Energieerzeugung verwendet werden kann. Es wird an dieser Stelle bereits darauf hingewiesen, dass der Wasserstoff auch auf andere Weise zur Energieerzeugung verwendet werden kann. In der Brennstoffzelle wird
ein elektrischer Strom erzeugt, der z.B. zur Erzeugung von Lichtbögen verwendet werden kann, mit welchen die vorgenannten Reaktionen u.U. gezündet werden können, die Reaktoren beheizt oder gekühlt werden können, die Fraktionierkolonne geheizt werden kann, oder etwaig vorhandene Kompressoren angetrieben werden können, kann der freiwerdende molekulare Wasserstoff z.B. in einem Verbrennungsmotor zur Erzeugung von Wärme und elektrischem Strom verwendet werden. Ebenso kann z.B. in einem Gasofen der freiwerdende molekulare Wasserstoff ausschließlich zur Erzeugung von Wärme verwendet werden. Die Brennstoffzelle weist eine Anode 41, eine Kathode 42 sowie eine für Protonen bzw. H₃O⁺-Ionen permeable Membran 43 auf. Die Anode wird mit Wasserstoff umspült, während die Kathode mit dem Sauerstoff umspült wird. An der Anode wird der molekulare Wasserstoff oxidiert, d.h. er gibt Elektronen ab und reagiert im wässrigen Medium der Zelle zu Hydroniumionen (H₃O⁺), die die Membran passieren und an der Kathode mit Superoxid-Anionen, die durch Reduktion aus Sauerstoff entstanden sind zu Wasser reagieren. Dabei fließt ein Strom, der erfindungsgemäß genutzt werden kann.

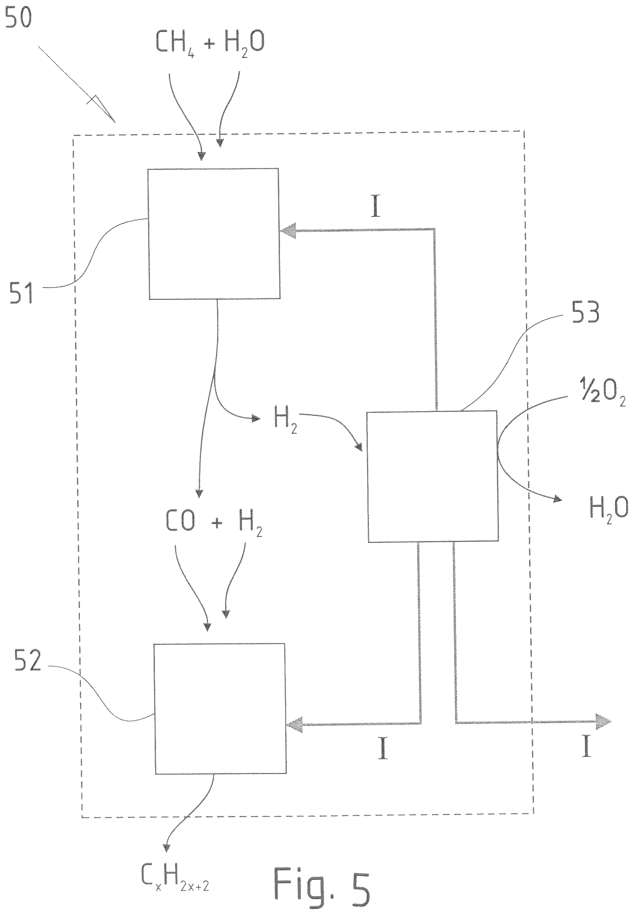

Fig. 5 zeigt symbolhaft die eine Kombinationsvorrichtung 50 enthaltend die vorgenannten Vorrichtungen zur Durchführung des erfindungsgemäßen Verfahrens. Vorgesehen ist ein Synthesegasreaktor 51, ein Reaktor 52 zur Herstellung von mittel- bis langkettigen Kohlenwasserstoffen aus dem Synthesegas sowie eine Brennstoffzelle 53 zur Erzeugung von elektrischem Strom I aus dem überschüssigen, bei der Synthesegasproduktion freiwerdenden molekularen Wasserstoff. Der elektrische Strom kann insbesondere für den Betrieb der Reaktionen in dem Synthesegasreaktor 51 und/oder dem Reaktor 52 verwendet werden. Etwaiger überschüssiger elektrischer Strom kann überdies anderweitig verwendet werden, z.B. in ein Netz eingespeist werden.

## Patentansprüche

1. Verfahren zur Erzeugung von mittel- bis langkettigen Kohlenwasserstoffen, insbesondere Alkanen, aus gasförmigen Alkanen bzw. Alkanhydraten, wobei
a) in einem ersten Teilverfahren ein gasförmiges Alkan über eine ein- oder mehrschrittige Reaktion in mittel- bis langkettige Kohlenwasserstoffe (Syntheseprodukt) unter Freisetzung von molekularem Wasserstoff überführt wird, und
b) in einem parallelen zweiten Teilverfahren der in dem ersten Teilverfahren freiwerdende molekulare Wasserstoff zur Energieerzeugung verwendet wird,
wobei weiterhin die die in dem zweiten Teilverfahren freiwerdende Energie zur Aktivierung und /oder zum Betrieb der Reaktion des ersten Teilverfahrens verwendet wird,
und wobei weiterhin in dem zweiten Teilverfahren der molekulare Wasserstoff in einer Brennstoffzelle zur Erzeugung von elektrischem Strom verwendet wird.

2. Verfahren gemäß Anspruch 1, **dadurch gekennzeichnet, dass** in dem ersten Teilverfahren Methangas in einem ersten Reaktionsschritt in ein Synthesegas überführt wird.

3. Verfahren gemäß einem der vorherigen Ansprüche, **dadurch gekennzeichnet, dass** in dem ersten Teilverfahren das Synthesegas in einem zweiten Reaktionsschritt in mittel- bis langkettige Kohlenwasserstoffe überführt wird.

4. Verfahren gemäß Anspruch 3, **dadurch gekennzeichnet, dass** der zweite Reaktionsschritt in dem ersten Teilverfahren eine Reaktion nach dem Fischer-Tropsch-Syntheseverfahren darstellt.

5. Verfahren gemäß einem der vorherigen Ansprüche, **dadurch gekennzeichnet, dass** das Verfahren weitere Schritte aufweist, ausgewählt aus der Gruppe enthaltend:
a) Fraktionierte Destillation (Rektifikation) des Syntheseprodukts,
b) Hydrocracking einer oder mehrere Fraktionen des Syntheseprodukts
c) Entrußung des Synthesegases

6. Verfahren gemäß einem der vorherigen Ansprüche **dadurch gekennzeichnet, dass** das verwendete Methangas aus der Bio-, Erd-, Synthese-, Gruben-, Klär- und/oder Deponiegasproduktion stammt, aus Methanhydrat stammt und/oder als Nebenprodukt bei der Erdölförderung oder -raffination anfällt.

7. Verfahren gemäß einem der vorherigen Ansprüche, **dadurch gekennzeichnet, dass** die beiden Teilverfahren räumlich und/oder zeitlich miteinander verbunden stattfinden.

8. Vorrichtung zur Erzeugung von mittel- bis langkettigen Kohlenwasserstoffen, insbesondere Alkanen, aus gasförmigen Alkanen oder Alkanhydraten, **dadurch gekennzeichnet, dass** diese aufweist:
a) einen ersten Reaktor zur Überführung eines gasförmigen Alkans oder Alkanhydrats über eine ein- oder mehrschrittige Reaktion in mittel- bis langkettige Kohlenwasserstoffe (Syntheseprodukt) unter Freisetzung von molekularem Wasserstoff,
b) einen zweiten Reaktor zur Energieerzeugung aus dem in dem ersten Reaktor freiwerdenden molekularen Wasserstoff, wobei der zweite Reaktor eine Brennstoffzelle aufweist, und
c) eine Einrichtung zur Nutzung der in dem zweiten Reaktor erzeugten Energie für den Betrieb der in dem ersten Reaktor durchgeführten ein- oder mehrschrittigen Reaktion.

9. Vorrichtung gemäß Anspruch 8, **dadurch gekennzeichnet, dass** diese überdies weitere Merkmale aufweist, die ausgewählt sind aus der Gruppe enthaltend:
a) der erste Reaktor weist eine Einrichtung zur Erzeugung von Synthesegas sowie eine Einrichtung zur Durchführung einer Polymerisierungsreaktion von Synthesegas zu mittel- bis langkettigen Alkanen auf;
b) der erste Reaktor weist Einrichtungen zur Fraktionierten Destillation (Rektifikation) des Syntheseprodukts, zum Hydrocracking einer oder mehrerer Fraktionen des Syntheseprodukts und/oder zur Entrußung des Synthesegases auf; und/oder
d) die Vorrichtung ist kombiniert mit einer Biogasanlage, einer Anlage zur Gewinnung von Klärgas, Deponiegas oder Grubengas, einer Kläranlage mit anaerober Behandlungsstufe, einer Auffangvorrichtung für gasförmige Alkane in einer Erdölförderungsanlage oder einer Erdölraffinerie, und/oder einer Ablage zur Gewinnung von Alkanhydraten.

## Claims

1. A method for the production of medium- to long-chain hydrocarbons, in particular alkanes, from gaseous alkanes or alkane hydrates, wherein
(a) in a first partial method, a gaseous alkane is converted into medium- to long-chain hydrocarbons (synthesis product) via a one-step or multi-step reaction with release of molecular hydrogen; and
(b) in a parallel second partial method, the molecular hydrogen released in the first partial method is used to generate energy,
wherein furthermore the energy released in the second partial method is used for activating and/or operating the reaction of the first partial method,
and wherein furthermore in the second partial method the molecular hydrogen in a fuel cell is used to generate electrical power.

2. The method according to claim 1, **characterized in that** in the first partial method methane gas is converted into a synthesis gas in a first reaction step.

3. The method according to any of the preceding claims, **characterized in that** in the first partial method the synthesis gas is converted into medium- to long-chain hydrocarbons in a second reaction step.

4. The method according to claim 3, **characterized in that** the second reaction step in the first partial method is a reaction according to the Fischer-Tropsch synthesis process.

5. The method according to any of the preceding claims, **characterized in that** the method comprises further steps selected from the group comprising:
a) Fractionated distillation (rectification) of the synthesis product,
(b) hydrocracking of one or more fractions of the synthesis product
(c) removal of soot from the synthesis gas.

6. The method according to any of the preceding claims, **characterized in that** the methane gas used originates from the production of biogas, natural gas, synthesis gas, mine gas, sewage gas and/or landfill gas, originates from methane hydrate and/or arises as a byproduct in the production or refining of crude oil.

7. The method according to any of the preceding claims, **characterized in that** the two partial methods take place spatially and/or temporally connected to each other.

8. An apparatus for producing medium- to long-chain hydrocarbons, in particular alkanes, from gaseous alkanes or alkane hydrates, **characterized in that** it comprises:
(a) a first reactor for converting a gaseous alkane or alkane hydrate into medium- to long-chain hydrocarbons (synthesis product) via a one-step or multi-step reaction with release of molecular hydrogen,
(b) a second reactor for generating power from the molecular hydrogen released in the first reactor, wherein the second reactor comprises a fuel cell, and
(c) a device for using the energy generated in the second reactor for operating the one-step or multi-step reaction carried out in the first reactor.

9. The apparatus according to claim 8, **characterized in that** it further comprises additional features selected from the group comprising:
(a) the first reactor comprises a device for producing synthesis gas and a device for carrying out a polymerization reaction of synthesis gas to medium- to long-chain alkanes;
(b) the first reactor comprises means for fractionated distillation (rectification) of the synthesis product, for hydrocracking one or more fractions of the synthesis product and/or for removal of soot from the synthesis gas; and/or
(d) the device is combined with a biogas plant, a plant for obtaining sewage gas, landfill gas or mine gas, a sewage treatment plant with an anaerobic treatment stage, a retaining device for gaseous alkanes in an oil production plant or an oil refinery, and/or a deposit for obtaining alkane hydrates.

## Revendications

1. Procédé, destiné à générer des hydrocarbures de chaîne moyenne à longue, notamment des alcanes, à partir d'alcanes ou d'hydrates d'alcane gazeux,
a) dans un premier procédé partiel, un premier alcane gazeux étant transformé par une réaction en une étape ou en plusieurs étapes en des hydrocarbures de chaîne moyenne à longue (produit de synthèse), en libérant de l'hydrogène moléculaire, et
b) dans un deuxième procédé partiel parallèle, l'hydrogène moléculaire libéré au cours du premier procédé partiel étant utilisé pour générer de l'énergie,
par ailleurs, l'énergie libérée au cours du deuxième procédé partiel étant utilisée pour activer et/ou pour commander la réaction du premier procédé partiel,
et par ailleurs, au cours du deuxième procédé partiel, l'hydrogène moléculaire étant utilisé dans une pile à combustible, pour générer du courant électrique.

2. Procédé selon la revendication 1, **caractérisé en ce que** lors du premier procédé partiel, du gaz méthane est transformé dans une première étape de réaction en un gaz de synthèse.

3. Procédé selon l'une quelconque des revendications précédentes, **caractérisé en ce que** lors du premier procédé partiel, le gaz de synthèse est transformé lors d'une deuxième étape de réaction en des hydrocarbures de chaîne moyenne à longue.

4. Procédé selon la revendication 3, **caractérisé en ce que** la deuxième étape de réaction au cours du premier procédé partiel correspond à une réaction selon le procédé de synthèse de Fischer-Tropsch.

5. Procédé selon l'une quelconque des revendications précédentes, **caractérisé en ce que** le procédé comporte des étapes supplémentaires, du groupe comprenant :
a) la distillation fractionnée (rectification) du produit de synthèse,
b) l'hydrocraquage d'une ou de plusieurs fractions du produit de synthèse,
c) le décalaminage du gaz de synthèse

6. Procédé selon l'une quelconque des revendications précédentes **caractérisé en ce que** le gaz méthane utilisé provient de la production de gaz bio, de gaz naturel, de gaz de synthèse, de grisou, de gaz de digestion et/ou de gaz de décharge, d'hydrate de méthane et/ou est un produit dérivé de la production pétrolière ou du raffinage pétrolier.

7. Procédé selon l'une quelconque des revendications précédentes, **caractérisé en ce que** les deux procédés partiels se déroulent en concomitance spatiale et/ou temporelle.

8. Dispositif, destiné à générer des hydrocarbures de chaîne moyenne à longue, notamment des alcanes, à partir d'alcanes ou d'hydrates d'alcane gazeux, **caractérisé en ce qu'**il comporte :
a) un premier réacteur, destiné à transformer un alcane gazeux ou un hydrate d'alcane gazeux, par une réaction en une étape ou en plusieurs étapes en des hydrocarbures de chaîne moyenne à longue (produit de synthèse), en libérant de l'hydrogène moléculaire,
b) un deuxième réacteur, destiné à générer de l'énergie à partir de l'hydrogène moléculaire, libéré dans le premier réacteur, le deuxième réacteur comportant une pile à combustible, et
c) un système, destiné à exploiter l'énergie générée dans le deuxième réacteur, pour commander la réaction en une étape ou en plusieurs étapes réalisée dans le premier réacteur.

9. Dispositif selon la revendication 8, **caractérisé en ce que** celui-ci présente de surcroît des caractéristiques supplémentaires qui sont choisies dans le groupe comprenant :
a) le premier réacteur comporte un système, destiné à générer du gaz de synthèse, ainsi qu'un système destiné à réaliser une réaction de polymérisation de gaz de synthèse en des alcanes de chaîne moyenne à longue ;
b) le premier réacteur comporte des systèmes destinés à la distillation fractionnée (rectification) du produit de synthèse, pour l'hydrocraquage d'une ou de plusieurs fractions du produit de synthèse et/ou pour le décalaminage du gaz de synthèse ; et/ou
d) le dispositif est associé à une centrale de biogaz, à une centrale de récupération de gaz de digestion, de gaz de décharge ou de grisou d'une station d'épuration à étape de traitement anaérobie, d'un dispositif collecteur d'alcanes gazeux dans une station de production pétrolière ou d'une raffinerie pétrolière et/ou d'une décharge de récupération d'alcanes gazeux.
